# EUROPEAN PATENT APPLICATION

(11) **EP 2 413 324 A1**
(43) Date of publication of application: **01.02.2012**
(21) Application number: 11166880.2
(22) Date of filing: 20.05.2011
(51) Int. Cl.: G11B 27/10, G11B 27/034, G11B 27/32, G06F 17/30, H04N 5/76, H04N 7/24, H04N 9/804, H04N 21/235

(54) **Electronic apparatus and playback position list displaying method**

(30) Priority: 27.07.2010 JP 2010168648
(71) Applicant: Kabushiki Kaisha Toshiba, Tokyo 105-8001 (JP)
(72) Inventor: Ohmori, Yoshihiro, Tokyo 105-8001 (JP); Kikuchi, Masaaki, Tokyo 105-8001 (JP); Higuchi, Yasukazu, Tokyo 105-8001 (JP); Itakura, Toyokazu, Tokyo 105-8001 (JP); Togashi, Yuuichi, Tokyo 105-8001 (JP)
(74) Representative: HOFFMANN EITLE

(57) **Abstract**

According to one embodiment, an electronic apparatus includes an input module (37), a display (33), a content information retrieving module, a catalog retrieving module (31), a first display controller (32), a second display controller (32), and a sending module (43). The content information retrieving module (35) is configured to retrieve, from a playback apparatus, content information indicating content in the playback apparatus. The catalog retrieving module (31) is configured to retrieve a first catalog from a server computer, the first catalog being associated with one or more lists respectively comprising one or more time information indicating a playback change position of the content. The first display controller (32) is configured to cause the display to display list information indicating the one or more lists based on the first catalog. The second display controller (32) is configured to cause the display to display one or more time information in a first list which is selected from the list information in accordance with an input from an input module (37). The sending module (43) is configured to send, to the playback apparatus, an instruction to jump to a playback position corresponding to the time information which is selected from the one or more time information in accordance with an input from the input module (37).

## Description

Embodiments described herein relate generally to an electronic apparatus for displaying a play list obtained from a server computer.

A chapter can be inserted at a given position as a breakpoint or a mark in a program provided by broadcasting, in a program distributed by a network, or in moving image data obtained by a user.

Also, a playback apparatus for playing back moving image data can be controlled via a network.

It is considered that setting of chapters (playback change positions) made by a viewer is uploaded to a server computer and the uploaded setting is distributed to other users.

In order to manipulate the chapters, if information on the chapters is displayed on a display on which playback is performed, played back images are obscured.

A general architecture that implements the various features of the embodiments will now be described with reference to the drawings. The drawings and the associated descriptions are provided to illustrate the embodiments and not to limit the scope of the invention.
FIG. 1 is a block diagram showing the configuration of a cloud system according to an embodiment.
FIG. 2 is a diagram for illustrating similarities according to the embodiment.
FIG. 3 is a diagram showing a display example of a table of tag lists according to the embodiment.
FIG. 4 is a diagram showing a display example of a table of tag lists according to the embodiment.
FIG. 5 is a diagram showing a display example of a table of tag lists according to the embodiment.
FIG. 6 is a flowchart showing a procedure of processing for displaying a table of the names and the like of tag lists in descending order of similarity.

Various embodiments will be described hereinafter with reference to the accompanying drawings.

In general, according to one embodiment, an electronic apparatus includes an input module (37), a display (33), a content information retrieving module, a catalog retrieving module (31), a first display controller (32), a second display controller (32), and a sending module (43). The content information retrieving module (35) is configured to retrieve, from a playback apparatus, content information indicating content in the playback apparatus. The catalog retrieving module (31) is configured to retrieve a first catalog from a server computer, the first catalog being associated with one or more lists respectively comprising one or more time information indicating a playback change position of the content. The first display controller (32) is configured to cause the display to display list information indicating the one or more lists based on the first catalog. The second display controller (32) is configured to cause the display to display one or more time information in a first list which is selected from the list information in accordance with an input from an input module (37). The sending module (43) is configured to send, to the playback apparatus, an instruction to jump to a playback position corresponding to the time information which is selected from the one or more time information in accordance with an input from the input module (37).

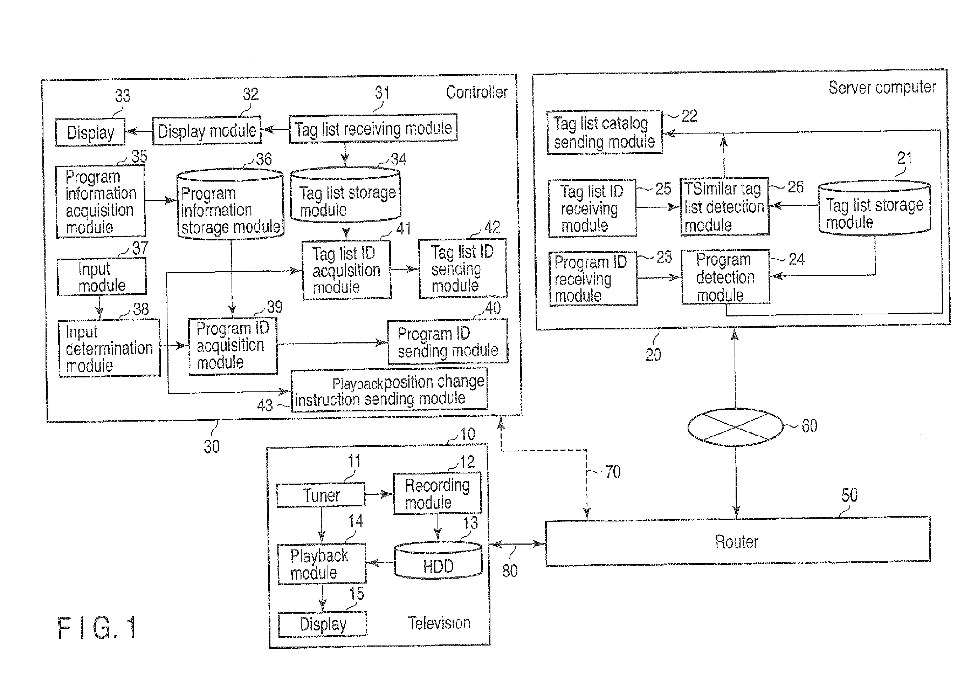

FIG. 1 is a block diagram showing the configuration of a cloud system according to an embodiment. As shown in FIG. 1, the cloud system comprises, for example, a television 10, a server computer 20, and a controller (electronic apparatus) 30.

The television 10 and a router 50 are connected by a wired local area network (LAN) 80. The controller 30 and the router 50 are connected by a wireless LAN 70. The router 50 and the server computer 20 are connected by an Internet 60.

The television 10 comprises, for example, a tuner 11, a recording module 12, a hard disk drive (HDD) 13, a playback module 14, and a display 15.

The server computer 20 comprises, for example, a tag list storage module 21, a tag list catalog sending module 22, a program ID receiving module 23, a program detection module 24, a tag list ID receiving module 25, and a similar tag list detection module 26.

The controller 30 comprises, for example, a tag list receiving module 31, a display module 32, a display 33, a tag list storage module 34, a program information acquisition module 35, a program information storage module 36, an input module 37, an input determination module 38, a program ID acquisition module 39, a program ID sending module 40, a tag list ID acquisition module 41, a tag list ID sending module 42, and a playback position change instruction sending module 43.

The tuner 11 receives a broadcast signal sent from a broadcasting station, and demodulates the broadcast signal. The recording module 12 stores, in the HDD 13, a program (content) demodulated by the tuner 11. The playback module 14 plays back the content demodulated by the tuner 11 or the content stored in the HDD 13, and displays the content on the display 15.

Tag lists (playback positions) are stored in the tag list storage module 21 of the server computer 20. A tag list is sent from a device whereby the tag list is set for content the program of which is recorded. A program ID, a tag list ID, tag information, and rating, for example, are described in the tag list. Pairs of time information and explanation information are described in the tag information. The time information indicates a playback position. In response to the time information, an instruction to change a playback position is sent to the television 10 from the controller 30. In addition, the tag list is described in Synchronized Multimedia Integration Language (SMIL).

At the request of the controller 30, the tag list catalog sending module 22 sends, to the controller 30, a tag list catalog for displaying the names, ratings, and the like of the tag lists. For example, when the program ID receiving module 23 acquires the program ID sent from the controller 30, the program detection module 24 detects a tag list which has the received program ID and which is high in rating, from the tag lists stored in the tag list storage module 21. The tag list catalog sending module 22 creates a tag list catalog for displaying the names and the like of the detected tag lists in descending order of rating. The tag list catalog sending module 22 then sends the created tag list catalog to the controller 30.

When the tag list ID receiving module 25 receives the tag list ID, the similar tag list detection module 26 detects a tag list highly similar to the tag list having the received tag list ID, from the tag lists stored in the tag list storage module 21. The tag list catalog sending module 22 creates a tag list catalog for displaying the detected tag lists in descending order of similarity. The tag list catalog sending module 22 then sends the created tag list catalog to the controller 30.

The similarity is described by using an example of calculating a similarity between a tag list 1 and a tag list 2. The similar tag list detection module 26 calculates a time difference between each tag in the tag list corresponding to the tag list ID and a closest tag in another tag list. The similar tag list detection module 26 then calculates the sum of the calculated time differences. A smaller calculated time difference means a higher similarity to the tag list corresponding to the original tag list ID.

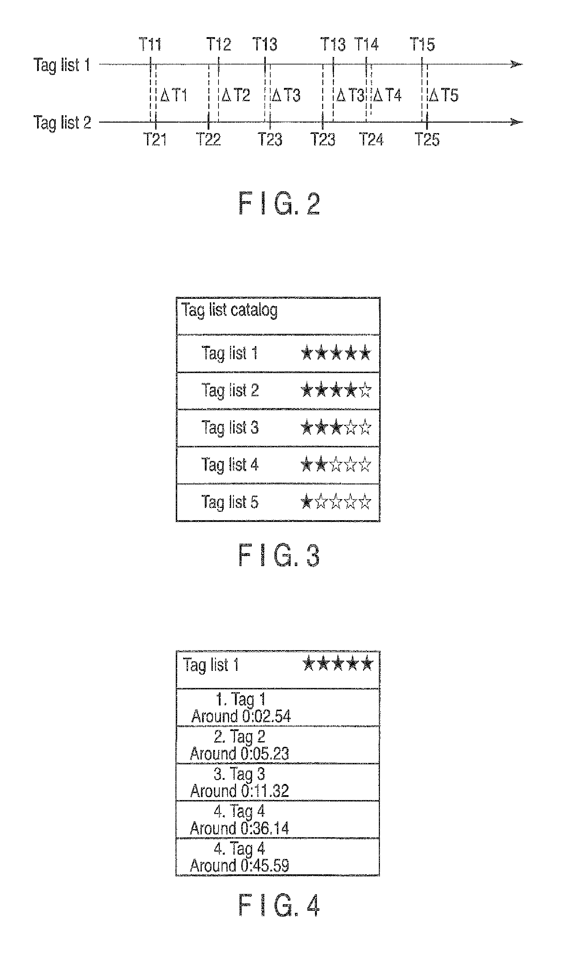

As shown in FIG. 2, the tag list 1 has a tag 1 indicating a time T11, a tag 2 indicating a time T12, a tag 3 indicating a time T13, a tag 4 indicating a time T14, and a tag 5 indicating a time T15. The tag list 2 has a tag indicating a time T21, a tag indicating a time T22, a tag indicating a time T23, a tag indicating a time T24, and a tag indicating a time T25.

The similar tag list detection module 26 calculates an absolute value ΔT1 of T11-T21, an absolute value ΔT2 of T12-T22, an absolute value ΔT3 of T13-T23, an absolute value ΔT4 of T14-T24, and an absolute valueΔT5 of T14-T24. The similar tag list detection module 26 then calculates ΔT1+ΔT2+ΔT3+ΔT4+ΔT5 (=ΔT) as a similarity.

Alternatively, when there is a difference in the number of tags between the tag list 1 and the tag list 2, all one-to-one combinations of tags in a tag list and tags in another tag list are found. Further, the total sum of the absolute values of the time difference of a corresponding pair of tags is found for each combination. A total sum having the minimum value is detected from the found total sums, and the detected total sum having the minimum value is determined as a similarity. In this case as well, a smaller total sum means a higher similarity.

The tag list receiving module 31 of the controller 30 receives the tag list sent from the server computer 20. The display module 32 displays the received tag list on the display 33. The tag list sent from the server computer 20 is stored in the tag list storage module 21. The program information acquisition module 35 acquires information on a program played back by the playback module 14 and included in an EPG, and stores the program information in the program information storage module 36.

The input determination module 38 determines a user request in accordance with data output from the input module 37.

When the input determination module 38 determines that the user requests the display of a table of the tag lists of the content being played back, the program ID acquisition module 39 acquires a program ID from the program information stored in the program information storage module 36, and the program ID sending module 40 sends the acquired program ID to the server computer 20.

Furthermore, the display module 32 displays the names and the like of the tag lists on the display 33 in accordance with the tag list catalog sent from the tag list catalog sending module 22 of the server computer 20. A display example is shown in FIG. 3. As shown in FIG. 3, the names of the tag lists (tag list 1, tag list 2, tag list 3, tag list 4, and tag list 5) and ratings (asterisks) are shown.

When the input determination module 38 determines that the user requests the display of a table of the tags in the selected tag list, the tag list ID acquisition module 41 acquires a tag list ID from data stored in the tag list storage module 34, and sends, to the server computer 20, a request to send detailed data on the tag list, together with the acquired tag list.

After the program ID is sent, the display module 32 receives the detailed tag list data sent from the server computer 20, and displays a table of the tags corresponding to the acquired detailed tag list data on the display 33.

A display example of a table of the tags in the tag list is shown in FIG. 4. The tag list 1 is displayed in the example shown in FIG. 4. As shown in FIG. 4, the names and the like of the tags (tag 1, tag 2, ...) and the time information are displayed. When the input determination module 38 determines that a tag is selected, the playback position change instruction sending module 43 sends, to the television 10, an instruction to change the playback position to a time indicated by the time information corresponding to the selected tag.

When the input determination module 38 determines that the user requests the display of a tag list similar to the selected tag list, the tag list ID of the selected tag list is acquired, and the tag list ID sending module 42 sends, to the server computer 20, an instruction to request a similar tag list catalog together with the acquired tag list ID. In response to the sending of the tag list ID, the tag list receiving module 31 receives the tag list catalog sent from the server computer 20. The display module 32 displays the received tag list on the display 33.

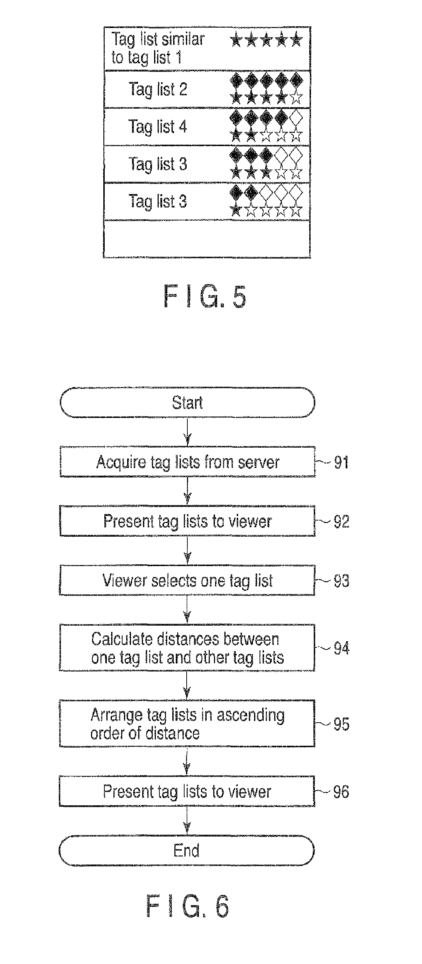

An example of displaying the names and the like of the tag lists in descending order of similarity is shown in FIG. 5. FIG. 5 shows an example of displaying the names and the like of the tag lists in descending order of similarity to the tag list 1. In FIG. 5, the tag list 2, the tag list 4, the tag list 3, and the tag list 5 are displayed in order. In addition, diamonds indicate similarities.

The table of the tag list 15 is displayed on the display 33 of the controller 30 separate from the television, so that played back images can be prevented from being obscured.

Now, a procedure of processing for displaying the table of the names and the like of the tag lists in descending order of similarity is described with reference to a flowchart of FIG. 6.

When there is an input from the input module 37 to request the display of a tag list catalog, a program ID is sent from the program ID sending module 40 to the server computer 20, and a tag list catalog for displaying tag lists is acquired from the server computer 20 (step 91). The display module 32 displays a table of tag lists on the display 33 in accordance with the acquired tag list catalog (step 92). In response to the input from the input module 37, the input determination module 38 detects one tag list selected from the tag lists by a viewer (step 93). The tag list ID of the selected tag list is sent to the server computer.

The server computer 20 calculates the distances between the selected tag list and other tag lists (step 94). The other tag lists are arranged in ascending order of the calculated distance (step 95). Tag list display information for the tag lists in the order of arrangement is sent to the controller 30.

The display module 32 displays, on the display 33, a table of the tag lists in ascending order of the distance from the previously selected tag list (in descending order of similarity) in accordance with the tag list catalog (step 96).

As a result of the processing described above, a table of tag lists can be displayed on the display 33 in descending order of similarity.

## Claims

1. An electronic apparatus **characterized by** comprising:
an input module (37);
a display (33);
a content information retrieving module (35) configured to retrieve, from a playback apparatus, content information indicating content in the playback apparatus;
a catalog retrieving module (31) configured to retrieve a first catalog from a server computer, the first catalog being associated with one or more lists respectively comprising one or more time information indicating a playback change position of the content;
a first display controller (32) configured to cause the display to display list information indicating the one or more lists based on the first catalog;
a second display controller (32) configured to cause the display to display one or more time information in a first list which is selected from the list information in accordance with an input from an input module (37); and
a sending module (43) configured to send, to the playback apparatus, an instruction to jump to a playback position corresponding to the time information which is selected from the one or more time information in accordance with an input from the input module (37).

2. The apparatus of Claim 1, **characterized by** further comprising a second sending module (42) configured to send, to the server computer, information indicating a second list which is selected from the list information in accordance with an input from the input module (37),
wherein the catalog retrieving module (31) is configured to retrieve, from the server computer, a second catalog being associated with one or more third lists, similarity of the third lists and the second list being high, and
the first display controller (32) is configured to cause the display to display information indicating the one or more third lists in accordance with the second catalog.

3. The apparatus of Claim 2, **characterized in that** the similarity is calculated by calculating an absolute value of a difference between a time indicated by one of the one or more time information in the first list and a time indicated by one of one or more time information in a fourth list which is close to the one of the one or more time information in the first list and which are retained by the server computer, and calculating the sum of the absolute values of the difference of the respective the one or more time information in the first list.

4. The apparatus of Claim 2, **characterized in that** when the number of one or more time information in the first list is different from the number of the one or more time information in the fourth list, the similarity is calculated by creating all one-to-one combinations of the one or more time information in the first list and the one or more time information in the fourth list, calculating a total sum of the absolute values of the difference of the time information for each of the created combinations, and detecting the minimum total sum from the calculated total sums.

5. A playback position list displaying method **characterized by** comprising:
retrieving, from a playback apparatus, content information indicating content in the playback apparatus;
retrieving a first catalog from a server computer, the first catalog being associated with one or more lists respectively comprising one or more time information indicating a playback change position of the content;
causing to a display to display list information indicating the one or more lists based on the first catalog;
causing to the display to display one or more time information in a first list which is selected from the list information in accordance with an input from an input module (37); and
sending, to the playback apparatus, an instruction to jump to a playback position corresponding to the time information which is selected from the one or more time information in accordance with an input from the input module (37).

6. The method of Claim 5, **characterized by** further comprising:
sending, to the server computer, information indicating a second list which is selected from the list information in accordance with an input from the input module (37);
retrieving, from the server computer, a second catalog being associated with one or more third lists, similarity of the third lists and the second list being high; and
causing the display to display information indicating the one or more third lists in accordance with the second catalog.

7. The method of Claim 6, **characterized in that** the similarity is calculated by calculating an absolute value of a difference between a time indicated by one of the one or more time information in the first list and a time indicated by one of one or more time information in a fourth list which is close to the one of the one or more time information in the first list and which are retained by the server computer, and calculating the sum of the absolute values of the difference of the respective the one or more time information in the first list.
